# EUROPEAN PATENT SPECIFICATION

(11) **EP 2 978 249 B1**
(45) Date of publication and mention of the grant of the patent: **13.09.2017**
(21) Application number: 15177732.3
(22) Date of filing: 21.07.2015
(51) Int. Cl.: H04W 12/06

(54) **METHOD AND SYSTEM FOR INITIATING A COMMUNICATION PROTOCOL**
VERFAHREN UND SYSTEM ZUR INITIIERUNG EINES KOMMUNIKATIONSPROTOKOLLS
PROCÉDÉ ET SYSTÈME PERMETTANT DE LANCER UN PROTOCOLE DE COMMUNICATION

(30) Priority: 22.07.2014 NL 2013236
(43) Date of publication of application: 27.01.2016
(73) Proprietor: bunq B.V., 1043 DS Amsterdam (NL)
(72) Inventor: NIKNAM, Ali, 1043 DS Amsterdam (NL); ZIOGAS, Petros, 1043 DS Amsterdam (NL); VAN, Wessel, 1043 DS Amsterdam (NL)
(74) Representative: Engelfriet, Arnoud Peter

(56) References cited:
- US-A1- 2011 307 599
- ANGUS K Y WONG: "The Near-Me Area Network", IEEE INTERNET COMPUTING, IEEE SERVICE CENTER, NEW YORK, NY.- INSTITUTE OF ELECTRICAL AND ELECTRONICS ENGINEERS, US, vol. 14, no. 2, 1 March 2010 (2010-03-01), pages 74-77, XP011290347, ISSN: 1089-7801, DOI: 10.1109/MIC.2010.49

## Description

### FIELD OF THE INVENTION

The invention relates to a computer-implemented method, in a server system, of initiating a communication protocol between a first and a second client device. The invention further relates to a server system, a client device and to computer-readable nonvolatile storage media comprising executable code for causing a computer to operate as the server system or the client device of the invention.

### BACKGROUND OF THE INVENTION

The rise of smartphones and other mobile devices is enormous. It is estimated over 1.5 billion such devices have been sold by the end of 2013. Smartphones and other mobile devices are ubiquitous, especially thanks to the huge variety of applications ("apps") offered for these devices. For almost any application or field there is a multitude of apps to make life easier, entertain people or provide an otherwise useful service.

Owners of mobile devices can carry out communication and services with each other, or with automated services, using these applications. For example, one may chat with others, send and retrieve e-mail, transmit files, play games, manage social networking, receive information such as weather updates or carry out financial transactions with one another, potentially also through third parties like the game service provider, social network server or bank. These communications require certain underlying technical communication protocols.

A technical challenge with any such communication protocol is selecting the right party to communicate with. While many technical solutions exist, these are often technically complex or require prior registration of clients so as to be certain that the right entity is being communicated with. For example websites may initiate a Secure Socket Layer security protocol to secure the communication with a client. Users may be requested to log into a service to authenticate themselves before they can communicate with other users, as in chatboxes and online forums. In the context of device to device communication, the Bluetooth protocol requires two devices to be 'paired' with each other, involving the entry of a four-digit PIN in each device so as to recognize the other device. Other protocols may require each client device to authenticate itself with a password or PIN to the server. This is perceived by users as cumbersome.

This cumbersomeness is particularly present when two devices are close to one another. In that context, users see little reason for complex communication protocols. If they are close, they can talk to each other with ease, so why should communicating through their phones be complex?

The technical problem therefore is how to initiate a communication protocol involving two nearby client devices with a minimum of protocol set-up overhead yet providing for adequate authentication of the other party. Authentication in this context means knowing that the other party is the correct one for the desired communication, not necessarily knowing that party's identity.

### SUMMARY OF THE INVENTION

The invention solves the above technical problem as follows. The first device sends a request to the server, identifying its geographical location, provided a particular application is currently active and on a foreground of the display of the device. At this time, the second device is unknown. The server then determines from plural client devices in communication with the server system their respective geographical locations and selects client devices that match three criteria:
(a) Their geographical location is within a predetermined distance to the first client,
(b) They have indicated in a communication to the server system an availability for participation in the protocol, and
(c) in each of these devices a particular application is currently active and on a foreground of a respective display screen of each of the plural client devices,

With criterion (a) the problem aspect of sufficient proximity is addressed. With criterion (b) it is now known that any of these client devices might serve as the second client device in the protocol. Note that the availability may be time-dependent and short-lived. With criterion (c) willingness to participate is determined.

Indications of the selected devices are transmitted back to the first client device and a selection is made of one client device. Indications could be e.g. a name or photo of the operator of the device, allowing for easy selection of the right person whose device is to be used. This selected device is designated as the second client device. With the devices now both designated, the communication protocol can be started by the first and the second client devices. For example the devices may now carry out a chat session, transmit a file, exchange or synchronize data or update settings. The protocol may involve a third party, e.g. the first device may send data to a server which sends the data to the second device, possibly after performing certain computations on the data and/or adding additional data. For example the first device may upload a picture which is subsequently reduced in size by the server and then sent to the second device, or the first device may send a payment transfer authorization message which the server processes, after which the server sends a payment transfer confirmation message to the second device.

This solution has a minimum of overhead: a message requesting the protocol, a response listing available devices and a selection of the desired second device. The lack of authentication in the protocol itself is compensated by the criterion (a) for sufficient proximity. If two devices are close, it is reasonable to assume their operators are close as well. The operators can then visually or verbally authenticate one another, e.g. by recognizing each other's face. Thus, the technical step of determining sufficient proximity removes the need for a technical authentication step. And criterion (b) and (c) limit accidental selection of a client device whose operator does not desire participation: the device has to have had indicated its availability and a particular application has to be on the foreground of a display of the device.

In short, this means the first client device is informed only of close-by devices whose operators have indicated their availability for the protocol. Generally such indication would have a short-lived value: the operator could easily walk away, out of range or end their availability for the protocol, e.g. by disabling the feature with a simple action on his or her device.

In a first embodiment, the step of obtaining the indication is performed by transmitting a message to the plural devices in communication with the server system whose geographical location is within a predetermined distance to the first client and receiving a positive response to the message. This embodiment provides an active step by the server, asking the close-by client devices if they are available. A positive response is then used.

In another embodiment, this step is performed by reading the indication from a list maintained at the server, which list is updated upon receipt of messages indicating availability and/or upon an expiry of a received message. Here the client devices themselves update the server about their availability. By having an expiry associated with received messages, it is avoided that old information is used.

In a further embodiment the indication of a client is a pseudo-randomly chosen identifier that is discarded after the communication protocol has been carried out. This enables communication between parties who might be unwilling to share personal details with one another.

In an embodiment the server system acts as a third party in the communication protocol. Some protocols may require the involvement of a third party. The server system may act as such a third party. This is advantageous as the server system is already in contact with the first and second client devices, obviating the need for a yet further protocol between first device and server and second device and server.

The invention further provides for a server and a client device for executing the method of the invention, and for a computer-readable nonvolatile storage medium comprising executable code for causing a computer to operate as the device of the invention.

### BRIEF DESCRIPTION OF THE FIGURES

The invention will now be explained in more detail with reference to the figures, in which:
Fig. 1 schematically shows an arrangement in accordance with the invention, comprising plural client devices and a server system;
Fig. 2 schematically illustrates the method of the invention;
Fig. 3 schematically shows the server system in more detail;
Fig. 4 schematically shows a client device in more detail, and
Fig. 5(a), 5(b) and 5(c) schematically show user interface screens on client devices.

In the figures, same reference numbers indicate same or similar features. In cases where plural identical features, objects or items are shown, reference numerals are provided only for a representative sample so as to not affect clarity of the figures.

### DETAILED DESCRIPTION OF CERTAIN EMBODIMENTS

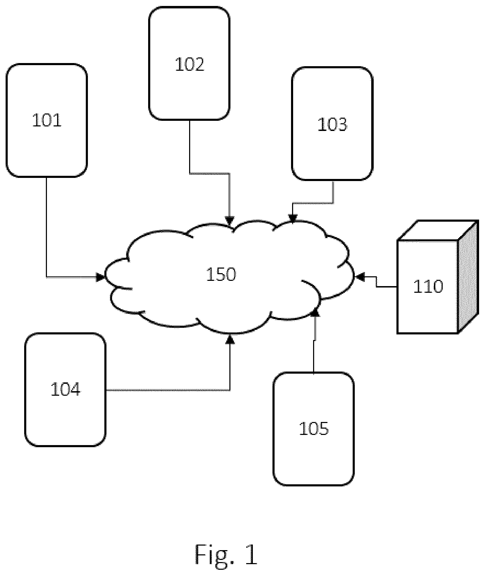

Fig. 1 schematically shows an arrangement in accordance with the invention, comprising plural client devices 101, 102, 103, 104, 105 and a server system 110. The client devices 101-105 may be embodied as mobile phones, tablets or similar devices provided with computer programs, colloquially known as apps, to provide the functionality to be discussed below.

The client devices 101-105 and the server 110 are able to communicate with each other and/or with further systems through networks such as the internet 150. For example the devices 101-105 may have wireless or wired internet connections using the 802.11 communication protocol or employ 3G or 4G wireless access to internet 150.

In this setting it is assumed the client device 101 is the first client device in accordance with the invention. The device 101, or rather its operator, wishes to initiate a communication protocol involving another device that is nearby. This device will hereafter be called the second device. The protocol may comprise exchange of data between the first and second device directly. The protocol may also involve exchange of data between the devices and the server, e.g. the first device sends data to the server 110 and the server 110 sends data to the second device. The server 110 may transform the data sent to the second device or send other data produced in response to the data sent by the first device. For example, the first device may send a request, and the server 110 produces a response sent to the second device. The server 110 may participate in the protocol in other ways as well.

It is worth noting that 'nearby' is a broad term. Any predetermined criterion can be used to determine if two devices are nearby, i.e. no more than a predetermined distance away. This requires determining geographical locations, which may be done with a variety of methods. A common way is to use GPS-based location determination, after which the predetermined distance is a simple calculation between two GPS locations. Instead of GPS a variety of other location determination protocols is readily available. The only requirement is that the location determination protocol allows for a determination by the server that two devices are no more than a predetermined distance away.

Note that this distance can be expressed in metres or feet, but also in more abstract terms: both devices are in the same building or on the same train. This can be determined for example by concluding that both devices are logged into the same 802.11 wireless network.

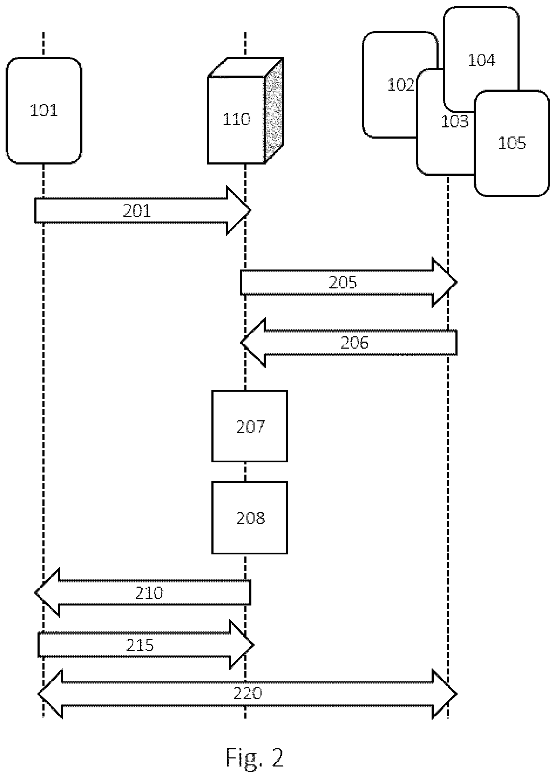

Fig. 2 schematically illustrates the method of the invention in the form of a communication diagram. The method starts at 201 with the first client device 101 sending to the server 110 a request to initiate the protocol. This request comprises a geographical location of the first client device. As outlined above, this could be its GPS coordinates or an indication of a wireless network to which the device 101 has access, or any other suitable indication of location. The request notably does not have any identification of the second client device.

Next, in 205 the server 110 determines from plural client devices 102-105 in communication with the server system their respective geographical locations. In the embodiment of Fig. 2, this is done by having the server 110 transmit messages to the plural devices 102-105 and having them respond, step 206, their geographical locations and an indication of their willingness to participate in the communication protocol involving the first device 101.

The message may or may not include a reference to the first device 101. The request in step 205 may be further provided with information regarding the type of communication desired. The client devices may make their response dependent on this information, so that a device would be available for some types of communication, e.g. chat or file transfer, but not others, e.g. a payment transaction.

Next, in step 207 the server 110 determines from the responses from steps 206 the respective distances to the first device 101 and which from the devices 102-105 are willing to participate in the protocol. Next, in 208 the server 110 selects those devices whose geographical location is within a predetermined distance to the first client device 101 and whose response included a willingness to participate.

In one embodiment of step 206 a client device provides a positive response, i.e. a willingness to participate, only if a particular application or 'app' is currently active on the device and is on a foreground of the display screen of the device. Furthermore, the application may need to be in a particular state, menu or function in addition to being in the foreground. In a particular embodiment the action that has to be performed on a client device to initiate the protocol can be chosen to be equal to the action one has to perform to indicate availability.

Alternatively to step 206 as described above the devices 102-105 may periodically send messages to the server 110 informing it of their then-current geographical locations. The message in step 205 then only requests the indication of willingness to participate, with or without the reference to the first device 101. The server 110 then selects in 207 the devices based on the geographical locations informed to it and the receipt of a positive response to the requested indication of willingness to participate.

In a variation, the sent messages may additionally comprise indications of willingness to participate or not by the devices 102-106. In this variation the clients thus themselves inform the server where they are and if they are available for the communication protocol. The server 110 then maintains a list indicating availability and location of the devices 102-106 and in step 207 reads the indication of availability from this list. Availability and/or location may be provided with an expiry period, meaning that old data is removed to avoid incorrect selections of devices.

Next, in step 210 the server 110 transmits to the first client device 101 indications of the one or more selected client devices from step 207. The indications can be e.g. a device identifier, an operator identifier such as a name or photo, or a pseudo-randomly chosen identifier that is discarded after the communication protocol has been carried out. The first client device 101 would typically present the received indications of devices as a list of some kind to the operator. The operator then selects one of the indications, which selection is returned in step 215. The use of a photo is advantageous as it allows easy selection by a human operator of the desired client device, yet does not reveal personal information to a human operator who is unfamiliar with the person or object shown in the photo.

In an embodiment, for added convenience the client devices 101-106 may be provided with a whitelist and/or a blacklist function. The lists comprise identifiers for other devices. With a whitelist function, only devices on the list would be presented to the operator of the first client device. With a blacklist function devices on the list would not be presented to the operator. This reduces the number of devices listed and allows easier selection.

If the request in step 201 comprises an indication of the first client device, then the same function can be employed at the other side. The indication would be communicated to the plural devices in step 205 and 206. These devices would then indicate a willingness only if the first client device is on the whitelist, or would not indicate a willingness if the first client device is on the blacklist.

Next in step 215 the server 110 receives from the first client device 101 a selection of one client device from the one or more selected client devices. This selected one device is designated as the second client device.

Next in step 220 the server 110 causes the communication protocol to be started between the first and the second client devices. At that point, the server's involvement may end, as with a direct client-to-client communication protocol. The server may however remain involved in the protocol somehow, for example as an intermediary between the first and second devices or as an additional third party.

For additional security in step 220 the server system may first communicate a security code to one or both of the first and second client devices. Only after the operator of the first client device enters the security code communicated to the second client device, and/or vice versa, will the protocol be executed. This provides an additional confirmation that the operators know who they are communicating with, blocking certain types of imposters.

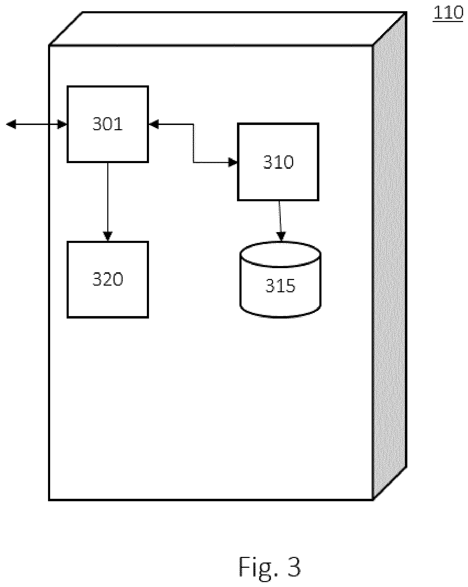

Fig. 3 schematically shows the server system 110 in more detail. The server 110 is configured for initiating the method of Fig. 2 between first device 101 and a second client device 102-105 over network 150.

The server 110 comprises a communication module 301 for communicating with the devices 101-105 over the network 150. The module 301 may comprise internet communication means as are known in the art. Other techniques for communicating with other devices over a network may also be employed.

In accordance with step 201 of the method, the communication module 301 receives from the first client device 101 a request to initiate the communication protocol. The request comprises a geographical location of the first client device but, as elaborated above, lacks any identification of the second client device.

The request is passed on to participant determination module 310 which, in accordance with step 205, determines from plural client devices 102-105 in communication with the server system their respective geographical locations. In the embodiment shown, module 310 has access to a database 315 where are stored periodically sent messages by the devices 102-105 informing server 110 of their then-current geographical locations. Module 310 then selects from the database 315 some devices from devices 102-105 based on the geographical locations recorded in database 315. Next, module 310 employs communication module 301 to transmit messages to the selected devices to receive a response with an indication of their willingness to participate in the communication protocol involving the first device 101.

In another embodiment module 310 to this end employs communication module 301 to transmit messages to the plural devices 102-105. Their responses, as per step 206 of the method, then comprises their geographical locations and an indication of their willingness to participate in the communication protocol involving the first device 101. In this embodiment database 315 is not necessary.

In either embodiment, responses from certain client devices are obtained through communication module 301 and fed to determination module 310. This module 310, following steps 207 and 208, next selects one or more client devices (a) whose geographical location is within a predetermined distance to the first client and (b) who have indicated in a communication to the server system an availability for participation in the communication protocol. The outcome of the determination in accordance with step 210 is transmitted through the communication module 301 to the client device 101 as indications of the one or more selected client devices.

Next, following step 215, the communication module 301 receives from the first client device 101 a selection of one client device from the one or more selected client devices. This selected one device is designated as the second client device. And finally, in step 220 protocol initiation module 320 causes the communication protocol to be started involving the first and the second client devices. As noted above the server 110 may or may not take part in this communication protocol.

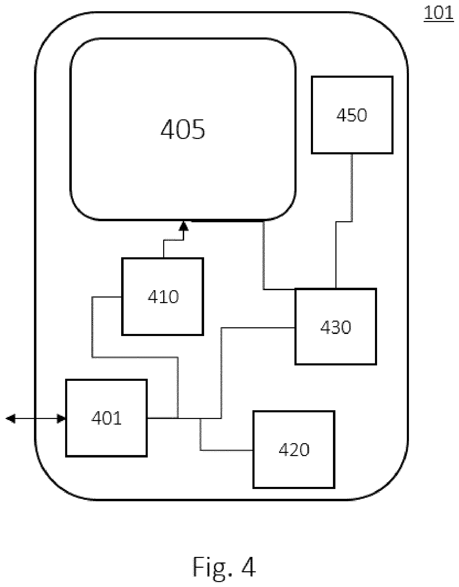

Fig. 4 schematically shows the client device 101 in more detail. The client device 101 is configured for initiating a communication protocol with a second client device with the aid of server 110, employing the method disclosed above with reference to Fig. 2.

Client device 101 comprises communication module 401, which is configured for sending to the server system 110 a request to initiate the transaction. The request comprises a geographical location of the first client device but lacks any identification of the second client device.

The request is picked up at the server 110 using its module 301, and as described above with reference to Fig. 3 the server 110 obtains indications of one or more selected client devices, said client devices having been selected by (a) their geographical location being within a predetermined distance to the first client and (b) their having indicated in a communication to the server system an availability for participation in the transaction. Module 301 returns these indications to the client 101, where module 401 receives them.

The client device 101 further comprises a display 405 where the indications are presented for an operator of the client device 101 to make a selection. The indications can be presented e.g. as a list where a selection can be made by selecting the indication desired. This can be done e.g. with a cursor or, when a touch-sensitive display is employed, with a detection of a finger along the display. Alternatively to letting the operator make a selection, the client device 101 may itself make a selection using predefined selection criteria such as a name comprised in the indication matching a name acquired earlier.

Selection module 410 is provided to facilitate the making of the selection. The outcome of the selection is fed again to module 401, which transmits to the server the selection of one client device from the one or more selected client devices. This selected client is the second client device in the communication protocol that is subsequently executed by module 420.

Of course client device 101 may additionally act as a second device in the protocol, i.e. another device 102-105 has sent the request of step 201. To this end, the device 101 is further provided with a participation determination module 430. The module 401 receives the request from the server 110 in step 205 and feeds the request to this module 430.

The module 430 acquires a location of device 101 and a willingness to participate in the communication protocol. The location of device 101 is determined by location module 450, e.g. a GPS receiver although other techniques for determining location can also be used. The willingness to participate can be determined by prompting an operator to make an explicit choice, e.g. pressing a button or selecting an item on display 405.

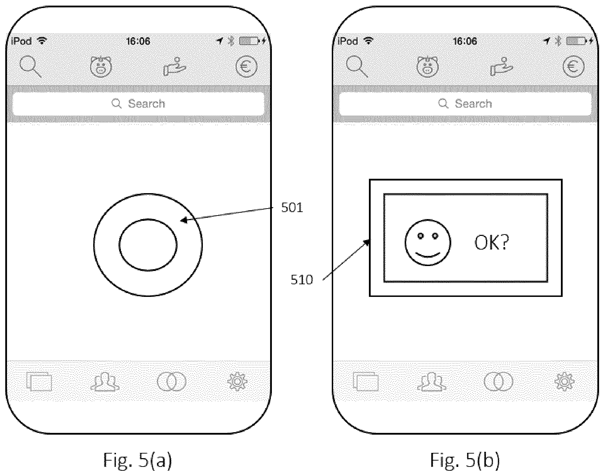

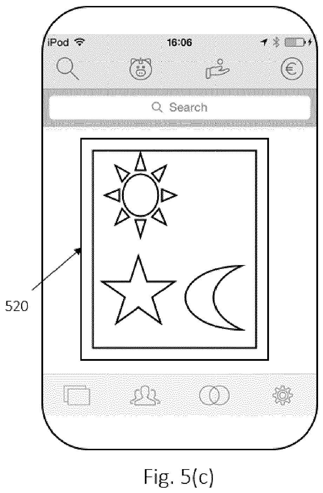

An alternative is to make the determination automatic, e.g. by determining that the device 101 is in a particular state. For example willingness can be determined from the fact that a particular application or 'app' is currently active on the device and is on a foreground of the display 405 of the device. Alternatively or in addition to being in the foreground, a particular menu or function may need to be open or active to arrive at the determination that the device 101 is willing to participate in the communication protocol. Figs. 5(a), 5(b) and 5(c) schematically show user interface screens on client devices. Fig. 5(a) shows a user interface screen that a user of the first client device 101 can use to initiate the process of the invention, as per step 201. The screen is that of a typical mobile phone. In accordance with the invention a button 501 is provided to initiate the method of the invention.

Fig. 5(b) shows a user interface screen that a user of another device 102-105 would see if asked for its willingness to participate in the communication protocol, as per steps 205 and 206. A message 510 is shown on the screen, identifying the device 101 as a smiley face, and asking for the willingness of the operator to participate by prompting "OK?" and allowing the user to select that prompt to indicate his or her willingness or dismiss the message to indicate lack of willingness. The display screen of the device may be touch-sensitive, in which case a touch of the finger on or near the "OK?" prompt can be interpreted as an indication of willingness.

Fig. 5(c) shows a user interface screen that presents to the user of the first client device 101 a list 520 of indications of other devices from which to make a selection, as per steps 210 and 215. The list 520 comprises three devices, indicated as a sun, a moon and a star. The operator of device 101 can select one of these, after which the protocol will be initiated involving the device 101 and the selected other device.

### CLOSING NOTES

The above provides a description of several useful embodiments that serve to illustrate and describe the invention. The description is not intended to be an exhaustive description of all possible ways in which the invention can be implemented or used. The skilled person will be able to think of many modifications and variations that still rely on the essential features of the invention as presented in the claims. In addition, well-known methods, procedures, components, and circuits have not been described in detail.

Some or all aspects of the invention may be implemented in a computer program product, i.e., a collection of computer program instructions stored on a computer readable storage device for execution by a computer. The instructions of the present invention may be in any interpretable or executable code mechanism, including but not limited to scripts, interpretable programs, dynamic link libraries (DLLs) or Java, PHP or Objective C classes. The instructions can be provided as complete executable programs, as modifications to existing programs or extensions ("plugins") for existing programs. Moreover, parts of the processing of the present invention may be distributed over multiple computers or processors for better performance, reliability, and/or cost.

Storage devices suitable for storing computer program instructions include all forms of non-volatile memory, including by way of example, semiconductor memory devices, such as EPROM, EEPROM, and flash memory devices, magnetic disks such as the internal and external hard disk drives and removable disks, magneto-optical disks and CD-ROM disks. The computer program product can be distributed on such a storage device, or may be offered for download through HTTP, FTP or similar mechanism using a server connected to a network such as the Internet. Transmission of the computer program product by e-mail is of course also possible.

When constructing or interpreting the claims, any mention of reference signs shall not be regarded as a limitation of the claimed feature to the referenced feature or embodiment. The use of the word "comprising" in the claims does not exclude the presence of other features than claimed in a system, product or method implementing the invention. Any reference to a claim feature in the singular shall not exclude the presence of a plurality of this feature. The word "means" in a claim can refer to a single means or to plural means for providing the indicated function.

## Claims

1. In a server system, a computer-implemented method of initiating a communication protocol involving a first and a second client device, the method comprising:
1) receiving from the first client device a request to initiate the protocol, the request comprising a geographical location of the first client device but lacking any identification of the second client device, a particular application in the first client device currently being active and on a foreground of a display screen of the first client device,
2) determining from plural client devices in communication with the server system their respective geographical locations and selecting one or more client devices (a) whose geographical location is within a predetermined distance to the first client, (b) who have indicated in a communication to the server system an availability for participation in the communication protocol, and (c) in each of which a particular application is currently active and on a foreground of a respective display screen of each of the plural client devices,
3) transmitting to the first client device indications of the one or more selected client devices,
4) receiving from the first client device a selection of one client device from the one or more selected client devices if the particular application in the first client device is still currently active and on the foreground, and
5) causing the communication protocol to be started involving the first and the second client devices.

2. The method of claim 1, in which step 2(b) is performed by transmitting a message to the plural devices in communication with the server system whose geographical location is within a predetermined distance to the first client and receiving a positive response to the message.

3. The method of claim 1, in which step 2(b) is performed by reading the indication from a list maintained at the server, which list is updated upon receipt of messages indicating availability and/or upon an expiry of a received message.

4. The method of claim 1, in which each indication in step 3 is a pseudo-randomly chosen identifier that is discarded after the communication protocol has been carried out.

5. The method of claim 1, in which the server system acts as a third party in the communication protocol.

6. A server system for initiating a communication protocol involving a first and a second client device, comprising:
• communication means for receiving from the first client device a request to initiate the protocol, the request comprising a geographical location of the first client device but lacking any identification of the second client device, a particular application in the first client device currently being active and on a foreground of a display screen of the first client device,
• participant determination means for determining from plural client devices in communication with the server system their respective geographical locations and selecting one or more client devices (a) whose geographical location is within a predetermined distance to the first client, (b) who have indicated in a communication to the server system an availability for participation in the communication protocol, and (c) in each of which a particular application is currently active and on a foreground of a respective display screen of each of the plural client devices,
• the communication means being additionally configured for transmitting to the first client device indications of the one or more selected client devices,
• the communication means being additionally configured for receiving from the first client device a selection of one client device from the one or more selected client devices, if the particular application in the first client device is still currently active and on the foreground, and
• initiation means for causing the communication protocol to be started involving the first and the second client devices.

7. A computer-readable nonvolatile storage medium comprising executable code for causing a computer to operate as the server system of claim 6.

8. In a first client device, a computer-implemented method of initiating a communication protocol with a second client device with the aid of a server, the method comprising:
1) sending to the server system a request to initiate the transaction, the request comprising a geographical location of the first client device but lacking any identification of the second client device,
2) receiving from the server system indications of one or more selected client devices, said client devices having been selected by (a) their geographical location being within a predetermined distance to the first client and (b) their having indicated in a communication to the server system an availability for participation in the transaction,
3) transmitting to the server a selection of one client device from the one or more selected client devices,
4) executing the communication protocol with the selected one client, being the second client device in the communication protocol, where step 1 is performed only if a particular application is currently active on the client device and is on a foreground of a display screen of the client device.

9. The method of claim 8, in which the currently active application, in addition to being active and on the foreground of the display screen, is in a particular state, menu or function.

10. A client device for initiating a communication protocol with a second client device with the aid of a server, the client device comprising
• communication means for sending to the server system a request to initiate the transaction, the request comprising a geographical location of the first client device but lacking any identification of the second client device,
• the communication means being additionally configured for receiving from the server system indications of one or more selected client devices, said client devices having been selected by (a) their geographical location being within a predetermined distance to the first client and (b) their having indicated in a communication to the server system an availability for participation in the transaction,
• the communication means being additionally configured for transmitting to the server a selection of one client device from the one or more selected client devices,
• protocol means for executing the communication protocol with the selected one client, being the second client device in the communication protocol, , where the communication means are configured for performing the step of sending the request only if a particular application is currently active on the client device and is on a foreground of a display screen of the client device.

11. The client device of the previous claim, where the communication means are configured for performing the step of sending the request only if the currently active application, in addition to being active and on the foreground of the display screen, is in a particular state, menu or function.

12. A computer-readable nonvolatile storage medium comprising executable code for causing a computer to operate as the client device of claim 10.

## Patentansprüche

1. In einem Serversystem, computerimplementiertes Verfahren des Initiierens eines Kommunikationsprotokolls, das eine erste und eine zweite Client-Einrichtung einbezieht, wobei das Verfahren Folgendes umfasst:
1) Empfangen einer Anfrage zum Initiieren des Protokolls von der ersten Client-Einrichtung, wobei die Anfrage einen geographischen Standort der ersten Client-Einrichtung umfasst, aber dieser eine jegliche Identifikation der zweiten Client-Einrichtung fehlt, wobei eine bestimmte Anwendung in der ersten Client-Einrichtung gegenwärtig aktiv ist und sich auf einem Vordergrund eines Anzeigebildschirms der ersten Client-Einrichtung befindet,
2) Bestimmen, aus mehreren Client-Einrichtungen, die mit dem Serversystem in Kommunikation stehen, deren jeweilige geographische Standorte und Auswählen von einer oder mehreren Client-Einrichtungen, (a) deren geographischer Standort innerhalb einer vorbestimmten Entfernung zum ersten Client liegt, (b) die in einer Kommunikation zum Serversystem eine Verfügbarkeit zum Teilnehmen am Kommunikationsprotokoll angegeben haben und (c) bei denen jeweils eine bestimmte Anwendung gegenwärtig aktiv ist und sich auf einem Vordergrund eines jeweiligen Anzeigebildschirms von jeder der mehreren Client-Einrichtungen befindet,
3) Übermitteln von Angaben der einen oder der mehreren ausgewählten Client-Einrichtungen zur ersten Client-Einrichtung,
4) Empfangen einer Auswahl von einer Client-Einrichtung aus der einen oder den mehreren ausgewählten Client-Einrichtungen von der ersten Client-Einrichtung, falls die bestimmte Anwendung in der ersten Client-Einrichtung gegenwärtig immer noch aktiv ist und sich auf dem Vordergrund befindet, und
5) Bewirken, dass das Kommunikationsprotokoll die erste und die zweite Client-Einrichtung einbeziehend gestartet wird.

2. Verfahren nach Anspruch 1, bei dem Schritt 2(b) durchgeführt wird, indem eine Nachricht zu den mehreren Einrichtungen, die mit dem Serversystem in Kommunikation stehen und deren geographischer Standort innerhalb einer vorbestimmten Entfernung zum ersten Client liegt, übermittelt und eine positive Antwort auf die Nachricht empfangen wird.

3. Verfahren nach Anspruch 1, bei dem Schritt 2(b) durchgeführt wird, indem die Angabe aus einer am Server verwalteten Liste gelesen wird, wobei die Liste beim Empfang von Nachrichten, die eine Verfügbarkeit angeben, und/oder bei einem Ablauf einer empfangenen Nachricht aktualisiert wird.

4. Verfahren nach Anspruch 1, bei dem jede Angabe in Schritt 3 eine pseudozufällig ausgewählte Kennung ist, die verworfen wird, nachdem das Kommunikationsprotokoll ausgeführt worden ist.

5. Verfahren nach Anspruch 1, bei dem das Serversystem als eine Drittpartei im Kommunikationsprotokoll agiert.

6. Serversystem zum Initiieren eines Kommunikationsprotokolls, das eine erste und eine zweite Client-Einrichtung einbezieht, umfassend:
• Kommunikationsmittel zum Empfangen einer Anfrage zum Initiieren des Protokolls von der ersten Client-Einrichtung, wobei die Anfrage einen geographischen Standort der ersten Client-Einrichtung umfasst, aber dieser eine jegliche Identifikation der zweiten Client-Einrichtung fehlt, wobei eine bestimmte Anwendung in der ersten Client-Einrichtung gegenwärtig aktiv ist und sich auf einem Vordergrund eines Anzeigebildschirms der ersten Client-Einrichtung befindet,
• Teilnehmerbestimmungsmittel zum Bestimmen, aus mehreren Client-Einrichtungen, die mit dem Serversystem in Kommunikation stehen, deren jeweilige geographische Standorte und zum Auswählen von einer oder mehreren Client-Einrichtungen, (a) deren geographischer Standort innerhalb einer vorbestimmten Entfernung zum ersten Client liegt, (b) die in einer Kommunikation zum Serversystem eine Verfügbarkeit zum Teilnehmen am Kommunikationsprotokoll angegeben haben und (c) bei denen jeweils eine bestimmte Anwendung gegenwärtig aktiv ist und sich auf einem Vordergrund eines jeweiligen Anzeigebildschirms von jeder der mehreren Client-Einrichtungen befindet,
• wobei die Kommunikationsmittel zusätzlich konfiguriert sind zum Übermitteln von Angaben der einen oder der mehreren ausgewählten Client-Einrichtungen zur ersten Client-Einrichtung,
• wobei die Kommunikationsmittel zusätzlich konfiguriert sind zum Empfangen einer Auswahl von einer Client-Einrichtung aus der einen oder den mehreren ausgewählten Client-Einrichtungen von der ersten Client-Einrichtung, falls die bestimmte Anwendung in der ersten Client-Einrichtung gegenwärtig immer noch aktiv ist und sich auf dem Vordergrund befindet, und
• Initiierungsmittel zum Bewirken, dass das Kommunikationsprotokoll die erste und die zweite Client-Einrichtung einbeziehend gestartet wird.

7. Computerlesbares nichtflüchtiges Speichermedium, das ausführbaren Code umfasst, so dass bewirkt wird, dass ein Computer als das Serversystem nach Anspruch 6 arbeitet.

8. In einer ersten Client-Einrichtung, computerimplementiertes Verfahren des Initiierens eines Kommunikationsprotokolls mit einer zweiten Client-Einrichtung mithilfe eines Servers, wobei das Verfahren Folgendes umfasst:
1) Senden einer Anfrage zum Initiieren der Transaktion zum Serversystem, wobei die Anfrage einen geographischen Standort der ersten Client-Einrichtung umfasst, aber dieser eine jegliche Identifikation der zweiten Client-Einrichtung fehlt,
2) Empfangen von Angaben von einer oder mehreren ausgewählten Client-Einrichtungen vom Serversystem, wobei die Client-Einrichtungen durch Folgendes ausgewählt worden sind: (a) ihr geographischer Standort befindet sich innerhalb einer vorbestimmten Entfernung zum ersten Client und (b) sie haben eine Verfügbarkeit zum Teilnehmen an der Transaktion in einer Kommunikation zum Serversystem angegeben,
3) Übermitteln einer Auswahl von einer Client-Einrichtung aus der einen oder den mehreren ausgewählten Client-Einrichtungen zum Server,
4) Ausführen des Kommunikationsprotokolls mit dem ausgewählten einen Client, der die zweite Client-Einrichtung im Kommunikationsprotokoll ist, wobei Schritt 1 nur durchgeführt wird, falls eine bestimmte Anwendung gegenwärtig auf der Client-Einrichtung aktiv ist und sich auf einem Vordergrund eines Anzeigebildschirms der Client-Einrichtung befindet.

9. Verfahren nach Anspruch 8, bei dem sich die gegenwärtig aktive Anwendung, zusätzlich dazu, dass sie aktiv ist und sich auf dem Vordergrund des Anzeigebildschirms befindet, in einem bestimmten Zustand, einem bestimmten Menü oder einer bestimmten Funktion befindet.

10. Client-Einrichtung zum Initiieren eines Kommunikationsprotokolls mit einer zweiten Client-Einrichtung mithilfe eines Servers, wobei die Client-Einrichtung Folgendes umfasst:
• Kommunikationsmittel zum Senden einer Anfrage zum Initiieren der Transaktion zum Serversystem, wobei die Anfrage einen geographischen Standort der ersten Client-Einrichtung umfasst, aber dieser eine jegliche Identifikation der zweiten Client-Einrichtung fehlt,
• wobei die Kommunikationsmittel zusätzlich konfiguriert sind zum Empfangen von Angaben von einer oder mehreren ausgewählten Client-Einrichtungen vom Serversystem, wobei die Client-Einrichtungen durch Folgendes ausgewählt worden sind: (a) ihr geographischer Standort befindet sich innerhalb einer vorbestimmten Entfernung zum ersten Client und (b) sie haben eine Verfügbarkeit zum Teilnehmen an der Transaktion in einer Kommunikation zum Serversystem angegeben,
• wobei die Kommunikationsmittel zusätzlich konfiguriert sind zum Übermitteln einer Auswahl von einer Client-Einrichtung aus der einen oder den mehreren ausgewählten Client-Einrichtungen zum Server,
• Protokollmittel zum Ausführen des Kommunikationsprotokolls mit dem ausgewählten einen Client, der die zweite Client-Einrichtung im Kommunikationsprotokoll ist, wobei die Kommunikationsmittel dazu konfiguriert sind, den Schritt des Sendens der Anfrage nur durchzuführen, falls eine bestimmte Anwendung gegenwärtig auf der Client-Einrichtung aktiv ist und sich auf einem Vordergrund eines Anzeigebildschirms der Client-Einrichtung befindet.

11. Client-Einrichtung nach dem vorangegangenen Anspruch, wobei die Kommunikationsmittel dazu konfiguriert sind, den Schritt des Sendens der Anfrage nur durchzuführen, falls sich die gegenwärtig aktive Anwendung, zusätzlich dazu, dass sie aktiv ist und sich auf dem Vordergrund des Anzeigebildschirms befindet, in einem bestimmten Zustand, einem bestimmten Menü oder einer bestimmten Funktion befindet.

12. Computerlesbares nichtflüchtiges Speichermedium, das ausführbaren Code umfasst, so dass bewirkt wird, dass ein Computer als die Client-Einrichtung nach Anspruch 10 arbeitet.

## Revendications

1. Dans un système serveur, procédé informatisé de lancement d'un protocole de communication impliquant un premier et un deuxième dispositif client, le procédé comprenant les étapes de :
1) réception en provenance du premier dispositif client d'une demande de lancement du protocole, la demande comprenant une localisation géographique du premier dispositif client mais ne comportant aucune identification du deuxième dispositif client, une application particulière dans le premier dispositif client étant actuellement active et au premier plan sur un écran d'affichage du premier dispositif client,
2) détermination parmi plusieurs dispositifs clients en communication avec le système serveur de la localisation géographique respective de ceux-ci et sélection d'un ou plusieurs dispositifs clients (a) dont la localisation géographique se trouve à moins d'une distance prédéterminée du premier client, (b) qui ont indiqué dans une communication au système serveur une disponibilité pour participer au protocole de communication, et (c) dans chacun desquels une application particulière est actuellement active et au premier plan sur un écran d'affichage respectif de chacun de la pluralité de dispositifs clients,
3) transmission au premier dispositif client d'indications concernant le ou les dispositifs clients sélectionnés,
4) réception en provenance du premier dispositif client d'une sélection d'un dispositif client parmi le ou les dispositifs clients sélectionnés si l'application particulière dans le premier dispositif client est encore actuellement active et au premier plan, et
5) démarrage du protocole de communication impliquant le premier et le deuxième dispositif client.

2. Procédé selon la revendication 1, dans lequel l'étape 2(b) est exécutée par transmission d'un message aux différents dispositifs en communication avec le système serveur dont la localisation géographique se trouve à moins d'une distance prédéterminée du premier client et réception d'une réponse positive au message.

3. Procédé selon la revendication 1, dans lequel l'étape 2(b) est exécutée par lecture de l'indication dans une liste tenue au sein du serveur, laquelle liste est mise à jour à la réception de messages indiquant une disponibilité et/ou à expiration d'un message reçu.

4. Procédé selon la revendication 1, dans lequel chaque indication à l'étape 3 est un identifiant choisi de manière pseudo-aléatoire qui est supprimé après que le protocole de communication a été exécuté.

5. Procédé selon la revendication 1, dans lequel le système serveur agit en tant que tierce partie dans le protocole de communication.

6. Système serveur pour le lancement d'un protocole de communication impliquant un premier et un deuxième dispositif client, comprenant :
• des moyens de communication pour recevoir en provenance du premier dispositif client une demande de lancement du protocole, la demande comprenant une localisation géographique du premier dispositif client mais ne comportant aucune identification du deuxième dispositif client, une application particulière dans le premier dispositif client étant actuellement active et au premier plan sur un écran d'affichage du premier dispositif client,
• des moyens de détermination de participant pour déterminer parmi plusieurs dispositifs clients en communication avec le système serveur la localisation géographique respective de ceux-ci et sélectionner un ou plusieurs dispositifs clients (a) dont la localisation géographique se trouve à moins d'une distance prédéterminée du premier client, (b) qui ont indiqué dans une communication au système serveur une disponibilité pour participer au protocole de communication, et (c) dans chacun desquels une application particulière est actuellement active et au premier plan sur un écran d'affichage respectif de chacun de la pluralité de dispositifs clients,
• les moyens de communication étant en outre configurés pour transmettre au premier dispositif client des indications concernant le ou les dispositifs clients sélectionnés,
• les moyens de communication étant en outre configurés pour recevoir en provenance du premier dispositif client une sélection d'un dispositif client parmi le ou les dispositifs clients sélectionnés, si l'application particulière dans le premier dispositif client est encore actuellement active et au premier plan, et
• des moyens de lancement pour démarrer le protocole de communication impliquant le premier et le deuxième dispositif client.

7. Support de stockage non volatile lisible par un ordinateur, comprenant un code exécutable pour faire en sorte qu'un ordinateur fonctionne en tant que système serveur selon la revendication 6.

8. Dans un premier dispositif client, procédé informatisé de lancement d'un protocole de communication avec un deuxième dispositif client à l'aide d'un serveur, le procédé comprenant les étapes de :
1) envoi au système serveur d'une demande de lancement de la transaction, la demande comprenant une localisation géographique du premier dispositif client mais ne comportant aucune identification du deuxième dispositif client,
2) réception en provenance du système serveur d'indications concernant un ou plusieurs dispositifs clients sélectionnés, lesdits dispositifs clients ayant été sélectionnés par (a) le fait que leur localisation géographique se trouve à moins d'une distance prédéterminée du premier client et (b) le fait qu'ils aient indiqué dans une communication au système serveur une disponibilité pour participer à la transaction,
3) transmission au serveur d'une sélection d'un dispositif client parmi le ou les dispositifs serveurs sélectionnés,
4) exécution du protocole de communication avec le client sélectionné, qui est le deuxième dispositif client dans le protocole de communication, l'étape 1 n'étant exécutée que si une application particulière est actuellement active sur le dispositif client et au premier plan sur un écran d'affichage du dispositif client.

9. Procédé selon la revendication 8, dans lequel l'application actuellement active, en plus d'être active et au premier plan sur l'écran d'affichage, se trouve dans un état particulier, un menu particulier ou une fonction particulière.

10. Dispositif client pour le lancement d'un protocole de communication avec un deuxième dispositif client à l'aide d'un serveur, le dispositif client comprenant :
• des moyens de communication pour envoyer au système serveur une demande de lancement de la transaction, la demande comprenant une localisation géographique du premier dispositif client mais ne comportant aucune identification du deuxième dispositif client,
• les moyens de communication étant en outre configurés pour recevoir en provenance du système serveur des indications concernant un ou plusieurs dispositifs clients sélectionnés, lesdits dispositifs clients ayant été sélectionnés par (a) le fait que leur localisation géographique se trouve à moins d'une distance prédéterminée du premier client et (b) le fait qu'ils aient indiqué dans une communication au système serveur une disponibilité pour participer à la transaction,
• les moyens de communication étant en outre configurés pour transmettre au serveur une sélection d'un dispositif client parmi le ou les dispositifs serveurs sélectionnés,
• des moyens de protocole pour exécuter le protocole de communication avec le client sélectionné, qui est le deuxième dispositif client dans le protocole de communication, les moyens de communication étant en outre configurés pour n'exécuter l'étape d'envoi de la demande que si une application particulière est actuellement active sur le dispositif client et au premier plan sur un écran d'affichage du dispositif client.

11. Dispositif client selon la revendication précédente, dans lequel les moyens de communication sont configurés pour n'exécuter l'étape d'envoi de la demande que si l'application actuellement active, en plus d'être active et au premier plan sur l'écran d'affichage, se trouve dans un état particulier, un menu particulier ou une fonction particulière.

12. Support de stockage non volatile lisible par un ordinateur, comprenant un code exécutable pour faire en sorte qu'un ordinateur fonctionne en tant que dispositif client selon la revendication 10.
